(19) Europäisches Patentamt / European Patent Office / Office européen des brevets

(11) **EP 1 659 738 B1**

(12) **EUROPEAN PATENT SPECIFICATION**

(45) Date of publication and mention
of the grant of the patent:
**10.03.2010 Bulletin 2010/10**

(51) Int Cl.:
**H04L 12/28** (2006.01)

(21) Application number: **05025543.9**

(22) Date of filing: **23.11.2005**

(54) **PACKET RETRANSMISSION IN A WIRELESS LAN.**

PAKETWIEDERÜBERTRAGUNG IN EINEM DRAHTLOSEN LOKALEN NETZWERK

RETRANSMISSION DE PAQUETS DANS UN RESEAU LOCAL SANS FIL

(84) Designated Contracting States:
**DE FR GB IT**

(30) Priority: **23.11.2004 KR 2004096596**

(43) Date of publication of application:
**24.05.2006 Bulletin 2006/21**

(73) Proprietor: **Samsung Electronics Co., Ltd.
Suwon-si, Gyeonggi-do (KR)**

(72) Inventors:
• **Na, Sung-Guk**
Suwon-si
Gyeonggi-do (KR)
• **Uh, Rae-Jin**
Seoul (KR)
• **Cho, Jin-Youn**
Suwon-si,
Gyeonggi-do (KR)
• **Choe, Mi-Ra**
Yeongtong-gu
Suwon-si
Gyeonggi-do (KR)

(74) Representative: **Lang, Johannes
Patent- und Rechtsanwälte
Bardehle Pagenberg Dost Altenburg Geissler
Galileiplatz 1
81679 München (DE)**

(56) References cited:
**EP-A- 0 924 896      US-A1- 2004 165 562**

• **YOUSSEF M A ET AL: "Specification and analysis of the DCF and PCF protocols in the 802.11 standard using systems of communicating machines" NETWORK PROTOCOLS, 2002. PROCEEDINGS. 10TH IEEE INTERNATIONAL CONFERENCE ON NOV. 12-15, 2002, PISCATAWAY, NJ, USA,IEEE, 12 November 2002 (2002-11-12), pages 132-141, XP010632574 ISBN: 0-7695-1856-7**
• **XIN WANG ET AL: "Comparison of IEEE 802.11e and IEEE 802.15.3 MAC" EMERGING TECHNOLOGIES: FRONTIERS OF MOBILE AND WIRELESS COMMUNICATION, 2004. PROCEEDINGS OF THE IEEE 6TH CIRCUITS AND SYSTEMS SYMPOSIUM ON SHANGHAI, CHINA MAY 31-JUNE 2, 2004, PISCATAWAY, NJ, USA, IEEE, 31 May 2004 (2004-05-31), pages 675-680, XP010716149 ISBN: 0-7803-7938-1**

EP 1 659 738 B1

Description

## BACKGROUND OF THE INVENTION

**Field of the Invention**

The present invention relates to re-transmitting a packet of a polling-based Wireless Local Area Network (WLAN) and, more particularly, to re-transmitting a packet between an Access Point (AP) and stations to reduce a packet loss rate in a LAN system employing a polling-based QoS (Quality of Service) guaranteed algorithm.

**Description of the Related Art**

A WLAN is a communication network capable of transmitting and receiving data without any cable or wire, which has increased in the number of users from year to year due to various advantages such as mobility, simplicity of installation, etc. Textual information, information for using Internet, etc. include information capable of being transmitted and received by a WLAN.

However, currently, a study is being actively made in order to accommodate various services demanding real-time characteristics, such as voice communication services, multilateral video conference services, real-time image transmission services and so forth. WLAN telephones are currently being commercialized, which enable anyone to provide access to the WLAN to dial and receive a call.

The LAN must be capable of guaranteeing QoS to stations or users using such services to smoothly provide various application services requiring real-time characteristics. Since each of the stations connected to the WLAN makes a request for a different level of service, the WLAN must also provide optimal services to the respective stations.

Standards for the WLAN used widely nowadays function to guarantee QoS or Class of Service (CoS), or to compensate related functions. The WLAN standard of the Institute of Electrical and Electronics Engineers (IEEE), which is widely applied in North America and Korea, supports a Point Coordination Function (PCF) as an option in order to transmit real-time information, wherein the PCF refers to a Medium Access Control (MAC) function according to a polling mechanism.

The WLAN IEEE standard follows "Standard for Information technology-Telecommunications and information exchange between systems-Local and metropolitan area networks-Specific requirements-Part 11: Wireless LAN Medium Access Control (MAC) and Physical Layer (PHY) Specifications," 1999 Edition.

Hereinafter, the IEEE WLAN standard will be referred to as the IEEE 802.11 standard. This standard defines the Medium Access Control (MAC) and Physical (PHY) layers for the WLAN.

The MAC layer defines orders and rules that a station or apparatus using the shared medium must observe in the use/access of the shared media, thereby making it possible to efficiently use the capacity of the medium.

IEEE 802.11 defines two types of access control mechanisms: a Distributed Coordination Function (DCF) and a Point Coordination Function (PCF).

The DCF is an access control mechanism defined as a fundamental specification in the IEEE 802.11 standard, which uses a contention based algorithm known as Carrier Sense Multiple Access/Collision Avoidance (CSMA/CA).

In the CSMA/CA based WLAN system, a station determines if a medium is busy. If so, the station waits for a predetermined time. After the predetermined time, if the medium is not busy, i.e. idle, the station decreases a back-off time. As such, the predetermined time for which each STA waits in order to initiate traffic is called an InterFrame Space (IFS). There are three IFSs for MAC protocol traffic. Among them, DIFS refers to a DCF InterFrame Space, PIFS refers to a PCF InterFrame Space, and SIFS refers to a Short InterFrame Space.

The station employing the DCF mechanism determines whether or not the medium is busy before transmitting a frame. If the medium is idle for a time greater than or equal to the DIFS, the station transmits the frame.

In contrast, if the medium is busy, the station initiates the back-off procedure. The station does not occupy the medium to transmit the frame until a value of a back-off timer becomes equal to zero(0).

In the back-off procedure, a random back-off time is assigned to the back-off timer. The random back-off time is dependent on the following relationship.

$$\text{Back-off Time} = \text{random()} * \text{slot-time}$$

wherein, random() = the random integer having a uniform probability distribution in the interval of [0, CW], and

$$CW = \text{Contention Window}, \; CW_{min} \# CW \# CW_{max}.$$

The back-off timer is reduced as much as the slottime whenever the medium maintains the idle state for the slot-time, but is no longer reduced when the medium is changed into the busy state.

After the medium is changed into the idle state during the DIFS, the back-off timer can be reduced as much as the slottime again. The back-off time is set to a value selected randomly within a preset range thereof rather than a generated value.

In addition, the back-off time set for an arbitrary station is reduced as much as a time slot while the medium is in the idle state. When re-transmission contention should be performed due to a failure in transmission contention, the back-off time is reduced as much as the time slot from the value reduced in the previous transmission contention. As such, the station does not initiate a transmission until the back-off timer becomes zero(0).

Whenever a plurality of stations attempt transmission at the same time to invite collision, the CWs are increased exponentially. At the same time, the back-off timer has a new back-off time.

After succeeding in transmission, the CW returns to CWmin (minimum CW). This exponential increase serves to lower a probability of a collision taking place again, thus enhancing safety of the network.

The DCF of IEEE 802.11 is a medium access mechanism capable of giving a fair chance to all of the stations when these stations have access to the medium, but it is not useful to establish the WLAN system supporting the QoS.

As the access control mechanism devised to guarantee the QoS in the WLAN, there are two: a contention-free method and a contention-based method. The polling-based mechanism is a representative contention-free method. The PCF makes use of this method.

The PCF is a centralized, polling-based access control algorithm, which requires an apparatus called a Point Coordinator (PC) in an AP. The PC gives a transmission chance to a specified station by transmitting a frame called a Contention-Free Poll (CF-Poll). When the PCF is used, a Contention-Free Period (CFP) in which only the station receiving a poll has the transmission chance without contention, and a Contention Period (CP) in which any station is capable of having access to the medium through contention are alternately repeated.

In order to use the PCF, the PC requires a function as a scheduler therein. This is because the PC predicts information on transmission time periods of all of the stations intended to transmit real time data, a size of the frame etc., and appropriately performs scheduling per cycle to give the transmission chance to the stations. If the appropriate scheduling is not performed, the station having an access delay in excess of a time limit can come into being, and the transmission efficiency of the medium can be deteriorated.

Among methods endowing a priority to each of the stations when the stations enter into transmission contention in the contention-based WLAN system, one is to differently apply the CWs determining the DIFS and the back-off time according to the priority in putting the CSMA/CA algorithm to use.

As the DIFS becomes smaller and as a value of the CW gets smaller, each data traffic or station has a higher priority.

Technology on a multi-polling DCF mechanism of overcoming disadvantages of the PCF using basic functions of the DCF is disclosed in Korean Patent Registration Publication No. 10-0442821 (filed on July 23, 2004 and titled "Data Communication Method Based Back-off Number Control").

As to the multi-polling DCF mechanism disclosed in the prior patent, when a multi-polling message, which includes information on IDentifiers (IDs) of stations intended for polling and on arbitrary back-off numbers allocated to the respective stations, is transmitted from an AP, the corresponding station receives the multi-polling message to set a back-off timer thereof to the back-off number allocated thereto, and subsequently performs a back-off procedure to attempt to get access to a medium.

In this manner, the multi-polling DCF mechanism transmits one polling message to a plurality of stations requiring the QoS (hereinafter, referred to as "MP-DCF stations"), wherein the polling message is defined by the back-off numbers of the corresponding stations using a multi-poll or a beacon, thereby making it possible for an equal transmission chance to be given to each of the MP-DCF stations.

However, for the PCF or MP-DCF, the polling-based MAC mechanism, for guaranteeing the QoS as set forth above, there is a problem to be settled with regard to packet processing.

In other words, the polling-based scheduling mechanism, such as the PCF or MP-DCF, aims at maximizing the number of times that each of the stations gets access in order to equally give the transmission chance to each of the stations with regard to the services requiring guaranteeing the QoS such as voice services. For this reason, only the method for maximizing usage of MAC resources between the AP and the stations is referred. However, no reference is made to a new measure to cope with a loss rate of wireless data having influence on a quality of the voice service.

The re-transmission algorithm for reducing the loss rate of data in the DCF that is generally used in the 802.11 WLAN MAC makes use of ACK and binary back-off mechanisms. However, the polling-based scheduling mechanism is operated on the basis of a back-off slot. Hence, using the re-transmission mechanism in the DCF causes a polling-based schedule to be broken, so that the polling-based scheduling mechanism is not operated normally.

In "Specification and analyissi of the DCF and PCF protocols in the 802.11 standard using systems of communicating machines", Youssef M A et al., Network protocols 2002, proceedings, 10th IEEE International Conference on Nov. 12 to 15, 2002, Piscataway, NJ, USA; IEEE, 12 Nov. 2002, pages 132-141, XP010632574, ISBN: 0-7695-1856-7 formal models for coordination functions of the IEEE 802.11 MAC layer are proposed. It is further disclosed that when a station receives a DATA frame, it waits for a SIFS (Short IFS) duration and transmits an ACK to the sender. There is no carrier sensing or backing off for ACK frames. The sender retransmits if no ACK is received within a specified duration.

## SUMMARY OF THE INVENTION

It is, therefore, an object of the present invention to provide methods of re-transmitting a packet of a polling-based WLAN system, capable of reducing a packet loss rate in a LAN system employing a polling-based QoS guaranteed algorithm.

In order to accomplish this object, methods as defined in independent claims 1 and 5 are provided and further advantageous embodiments of the invention are defined in the dependent claims.

## BRIEF DESCRIPTION OF THE DRAWINGS

A more complete appreciation of the present invention, and many of the attendant advantages thereof, will be readily apparent as the present invention becomes better understood by reference to the following detailed description when considered in conjunction with the accompanying drawings in which like reference symbols indicate the same or similar components, wherein:

Fig. 1 is a view of a configuration of a super frame to explain a re-transmission in a polling-based WLAN system in accordance with an embodiment of the present invention;

Fig. 2 is a view of a super frame of a re-transmission procedure in a station in accordance with an embodiment of the present invention;

Fig. 3 is a flowchart of a re-transmitting procedure in each station in accordance with an embodiment of the present invention;

Fig. 4 is a view of a super frame of a retransmission procedure in an AP in accordance with an embodiment of the present invention; and

Fig. 5 is a flowchart of a re-transmitting procedure in an AP in accordance with an embodiment of the present invention.

## DETAILED DESCRIPTION OF THE INVENTION

The present invention will now be described more fully hereinafter with reference to the accompanying drawings, in which exemplary embodiments of the present invention are shown. The present invention can, however, be embodied in different forms and should not be construed as being limited to the embodiments set forth herein. Rather, these embodiments are provided so that this disclosure will be thorough and complete, and will fully convey the scope of the present invention to those skilled in the art. Like numbers refer to like elements throughout the specification.

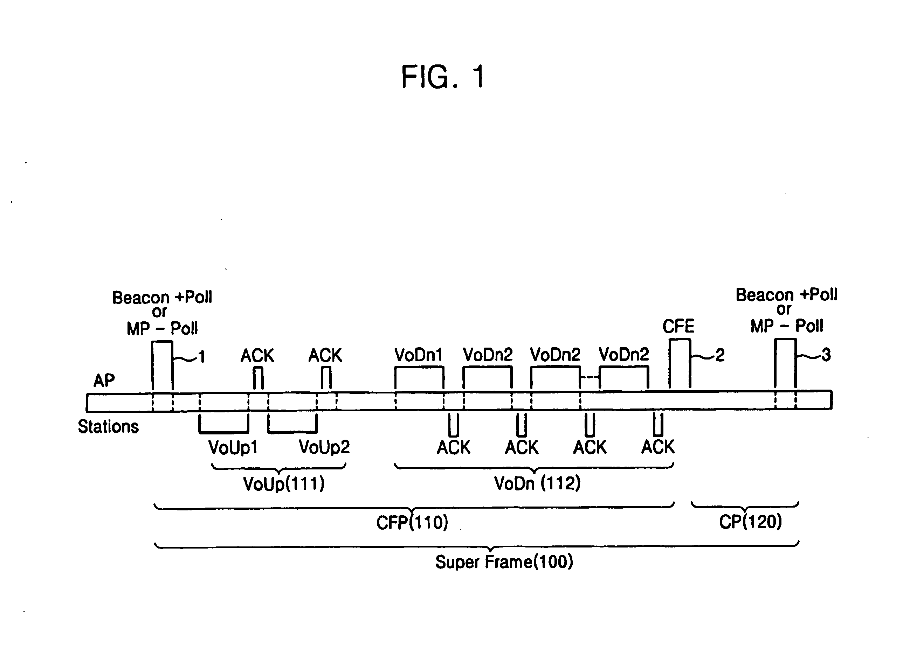

Fig. 1 is a view of a configuration of a super frame for explaining a concept of re-transmission in a polling-based WLAN system according to an embodiment of the present invention.

Referring to Fig. 1, the super frame for performing re-transmission according to one embodiment of the present invention includes a first period to provide a polling message, a poll, to arbitrary stations at an AP and to allow only the stations receiving the poll to get access to a medium without contention, and a second period to allow the stations to get access to the medium through contention.

In the first period of the super frame, scheduling is performed to allow the stations to perform a mode of transmitting packets stored in their own queues to the AP, and to allow the AP to perform a mode of transmitting packets stored in its own queue to the arbitrary stations. The super frame provides a frame period between the beacon of a certain period and the beacon of the next period.

Hereinafter, for the sake of convenience, a period of the stations performing the mode of transmitting packets stored in their own queues to the AP is referred to as a "VoUp period," and a period of the AP performing the mode of transmitting packets stored in its own queue to the arbitrary stations is referred to as a "VoDn period."

Furthermore, the first period is a Contention-Free Period (CFP) and the second period is a Contention Period (CP).

Thus, the CFP is a period between a point of time when a beacon signal is generated and a point of time when a contention-free end signal is generated, and the CP is period between a point of time when a contention-free (CF) end signal is generated and a point of time when the next beacon signal is generated.

The CFP consists of the VoUp period and the VoDn period, wherein the VoUp period refers to a period for transmitting packets stored in its own queue to the AP without contention by the station receiving the polling message from the AP, and the VoDn period refers to a period for for transmitting packets stored in its own queue to the corresponding station without contention by the AP.

For the VoUp period of the CFP, each station receiving the polling message from the AP transmits the packets stored in its own queue to the AP, and whenever the packets are received from the stations, the AP transmits acknowledgment signals of the packets to the corresponding stations.

For the VoDn period of the CFP, the AP transmits packets stored in its own queue to arbitrary stations, and whenever the packets are received from the AP, the stations transmit acknowledgment signals of the packets to the AP.

For the VoUp period of the CFP, whenever the packets are received from the stations, the AP transmits the acknowledgment signals to the corresponding stations. To this end, the stations occupy the medium in order to transmit the corresponding packets to the AP and give back a right to occupy the medium after terminating the transmission of the packets.

Each station occupies the medium to transmit the acknowledgment signal of the packets received from the stations to the AP. To this end, each station occupies the corresponding medium to transmit the acknowledgment signal to the AP using a Short InterFrame Space (SIFS) of InterFrame Spaces (IFSs).

Therefore, for the VoUp period of the CFP, each station transmits the packets to the AP, and then, when no acknowledgment signal has been received from the AP in the time that the SIFS has lapsed, recognizes that the AP has failed to receive the transmitted packets.

Hence, the stations transmit the corresponding packets to the AP for the CP with respect to the packets whose transmission results in failure after the CFP has been terminated.

To this end, the stations have a queue (hereinafter, referred to as a "CF transmission queue") for transmitting the packets to the AP by polling for the CFP, and a queue (hereinafter, referred to as a "CP transmission queue") for transmitting the packets to the AP after occupying the medium through contention for the CP.

Therefore, the stations transmit the packets stored in the CF transmission queue to the AP for the CFP, as well as transmitting the packets stored in the CP transmission queue to the AP for the CP.

The stations perform a re-transmission procedure for the packets which have been transmitted to the AP and whose acknowledgment signals have not been received from the AP, and transmit the corresponding packets to the AP.

In order to transmit the packets that the stations attempt to transmit for the CFP and have not yet transmitted to the AP, the stations transmit the packets and determine whether or not the transmission of the corresponding packets has resulted in failure. Then, when the transmission results in failure, the stations pick out the packets whose transmission has resulted in failure and transmit the picked packets to the AP for the CP following the CFP.

When the CP is initiated after the CFP has been terminated and when the stations occupy the medium, the stations re-transmit the packets whose transmission has resulted in failure for the CFP, to the AP with a first priority.

In order to transmit the packets whose transmission has resulted in failure for the CFP with a first priority, the stations enqueue the packets into a first portion of the CP transmission queue to transmit the corresponding packets for the CP, when no acknowledgment signal has been received from the AP for the CFP until the set SIFS has lapsed after the arbitrary packets have been transmitted to the AP.

When the CP is initiated after the CFP has been terminated, the stations transmit the corresponding packets stored in the first portion of the CP transmission queue to the AP, thereby re-transmitting the packets that the stations have attempted to transmit, but have failed to transmit.

As the packets whose transmission has resulted in failure for the CFP are enqueued in the first portion of the CP transmission queue, the packets can be transmitted to the AP with a first priority for the CP when the CP is initiated after the CFP has been terminated.

Similarly, for the VoDn period of the CFP, whenever the packets have been received from the AP, the stations transmit acknowledgment signals of the packets to the AP. To this end, the AP occupies the medium in order to transmit the corresponding packets to the stations and gives back a right to occupy the medium after completing the transmission of the packets.

The AP occupies the medium to transmit the acknowledgment signals of the packets received from the stations to the corresponding stations. To this end, the AP occupies the corresponding medium to transmit the acknowledgment signal to the corresponding station using an SIFS of IFSs.

Therefore, for the VoDn period of the CFP, the AP transmits the packets to each station, and then, when no acknowledgment signal has been received from the corresponding stations by the time that the SIFS has lapsed, recognizes that the packets that the AP has transmitted to the corresponding stations have not been received by the corresponding stations.

Hence, the AP transmits the corresponding packets to the corresponding stations for the CP with respect to the packets whose transmission has resulted in failure after the CFP has been terminated.

To this end, the AP has a queue (hereinafter, referred to as a "CF transmission queue" for transmitting the packets to the stations by means of polling for the CFP, and a queue (hereinafter, referred to as a "CP transmission queue") for transmitting the packets to the corresponding stations after occupying the medium through contention for the CP.

Therefore, the AP performs operations of transmitting the packets stored in the CF transmission queue to the corresponding stations for the CFP, as well as of transmitting the packets stored in the CP transmission queue to the corresponding stations for the CP.

At this time, the AP performs re-transmission procedure to the packets which are transmitted to the corresponding stations and whose acknowledgment signals are not received from the corresponding stations, and transmits the corresponding packets to the AP.

In order to transmit the packets that the AP attempts to transmit for the CFP and does not yet transmit to the corresponding stations, the AP transmits the packets and determines whether the transmission of the corresponding packets results in failure or not. Then, when the transmission results in failure, the AP picks out the packets whose transmission results in failure and transmits the picked packets to the corresponding stations for the CP following the CFP.

When the CP is initiated after the CFP is terminated and when the AP occupies the medium, the AP performs operation of re-transmitting the corresponding packets whose transmission results in failure for the CFP, to the corresponding stations with first priority.

In order to transmit the packets whose transmission results in failure for the CFP with first priority, the AP enqueues the packets into a first portion of the CP transmission queue provided to transmit the corresponding packets for the CP, when no acknowledgment signal is received from the corresponding stations for the CFP until the set SIFS has lapsed after the arbitrary packets are transmitted to the corresponding stations.

When the CP is initiated after the CFP has been terminated, the AP transmits the corresponding packets stored in the first portion of the CP transmission queue to the corresponding stations, thereby re-transmitting the packets that the AP has attempted to transmit, but has failed to transmit.

As the packets whose transmission has resulted in failure for the CFP are enqueued in the first portion of the CP transmission queue, the packets are transmitted to the stations with a first priority for the CP when the CP is initiated after the CFP has been terminated.

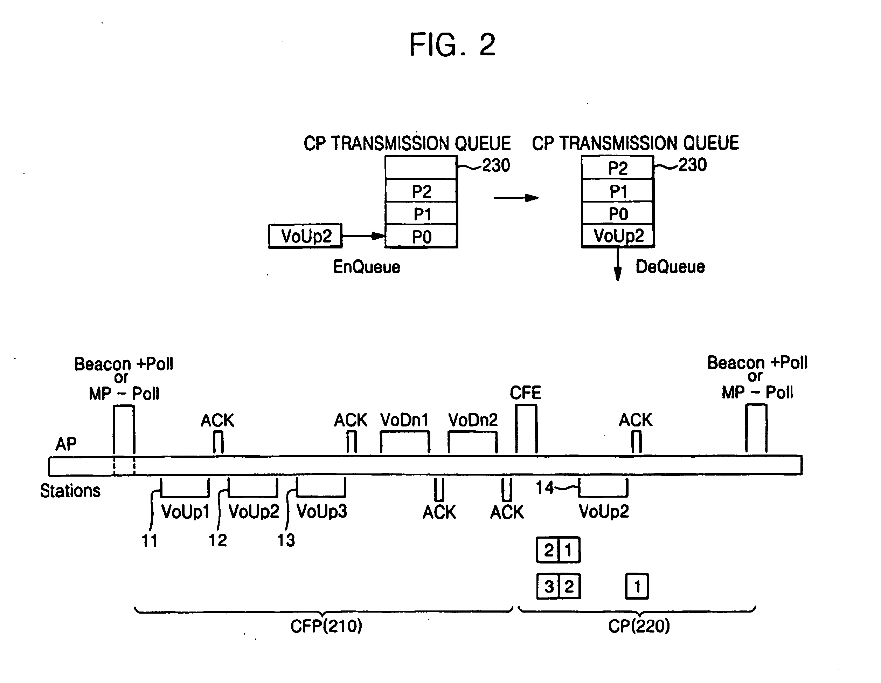

Fig. 2 is a view of a super frame performing a re-transmission procedure in a station in accordance with an embodiment of the present invention.

As shown in Fig. 2, one super frame includes a CFP that has a period from a point in time when one beacon signal has been generated to a piont in time when a CF end signal has been generated, and a CP that has a period from a point in time when a CF end signal has been generated to a point in time when the next beacon signal has been generated. The CFP consists of a VoUp period and a VoDn period.

For the VoUp period of the CFP, the stations receiving a polling message from an AP transmit packets VoUp1, VoUp2 and VoUp3 stored in their own CF transmission queues to the AP without contention, and the AP transmits an acknowledgment (ACK) signal of each packet to the corresponding station.

Furthermore, for the VoDn period of the CFP, the AP occupies a medium without contention to transmit packets VoDn1 and VoDn2 stored in its own CF transmission queue to the corresponding stations, and the corresponding stations transmit an acknowledgment (ACK) signal of each packet to the AP.

In this normal case, for the VoUp period of the CFP, when an arbitrary station transmits at least one packet stored in its own CF transmission queue, the AP receives the corresponding packet and transmits an acknowledgment signal of the packet to the corresponding station whenever the corresponding packet has been received.

Furthermore, in the normal case, for the VoDn period of the CFP, when the AP transmits the packets stored in its own CF transmission queue, each station receives at least one corresponding packet and transmits the acknowledgment signal of the packet to the AP whenever the corresponding packet has been received from the AP.

For the VoUp period of the CFP, whenever the packets are received from the stations, the AP transmits the acknowledgment signals of the packets to the corresponding stations. To this end, the stations occupy the medium in order to transmit the corresponding packets to the stations and give back a right to occupy the medium after completing the transmission of the packets.

The AP must occupy the medium to transmit the acknowledgment signals of the packets received from the stations to the corresponding stations. To this end, the AP occupies the corresponding medium to transmit the acknowledgment signal to the corresponding station using an SIFS of IFSs.

However, it can be seen that, as shown, for the VoUp period of the CFP, each of the stations receiving the polling message from the AP occupies the medium without contention to transmit the packets of VoUp1, VoUp2 and VoUp3, which are stored in the queues of the corresponding stations, to the AP, while the AP does not transmit the acknowledgment signal with respect to all the packets.

In other words, it can be seen that the AP normally receives the packets of VoUp1 and VoUp3 that arbitrary stations transmit from their own CF transmission queues and transmits each acknowledgment signal of the reception to the corresponding stations, but the AP fails to normally receive the packet of VoUp2 that the arbitrary station transmits from its own CF transmission queue and does not transmit the acknowledgment signal of the reception to the corresponding station. The AP does not transmit the acknowledgment signal means that the AP does not receive the corresponding packet(s) from the corresponding station(s).

If, for the VoUp period of the CFP, each station transmits the packet to the AP and fails to receive any acknowledgment signal from the AP by the time that the SIFS has lapsed, the corresponding station determines that the packet transmitted to the AP has not been received by the AP.

Therefore, since the station transmitting the packet of VoUp2 to the AP does not receive the acknowledgment signal from the AP, the station determines that the transmitted packet has not been received by the AP. Accordingly, the station transmits the VoUp packet whose transmission has resulted in failure to the AP for the CP after the CFP has been terminated.

In other words, as set forth with reference to Fig. 1, each station includes the CF transmission queue for transmitting the packets to the AP by polling for the CFP, and the CP transmission queue for transmitting the packets to the AP after occupying the medium through contention for the CP.

Therefore, the station transmitting the packet of VoUp2 to the AP has transmitted the packet of VoUp2 stored in the CF transmission queue for the CFP, but has failed to transmit, and as such, to transmit the corresponding packet with a first priority, the station enqueues the corresponding packet in a first portion of the CP transmission queue to transmit the corresponding packet for the CP.

When the CP is initiated after the CFP has been terminated, the station transmits the corresponding packet stored in the first portion of the CP transmission queue to the AP, thereby re-transmitting the packet of VoUp2 that the station has attempted to transmit, but has failed to transmit.

Since the packet VoUp2 whose transmission has resulted in failure for the CFP is enqueued in the first portion of the CP transmission queue provided to the corresponding station, the packet is re-transmitted to the AP with a first priority for the CP when the CP is initiated after the CFP has been terminated. The AP transmits the acknowledgment (ACK) signal indicating that the packet VoUp2 has been normally received from the corresponding station to the corresponding station.

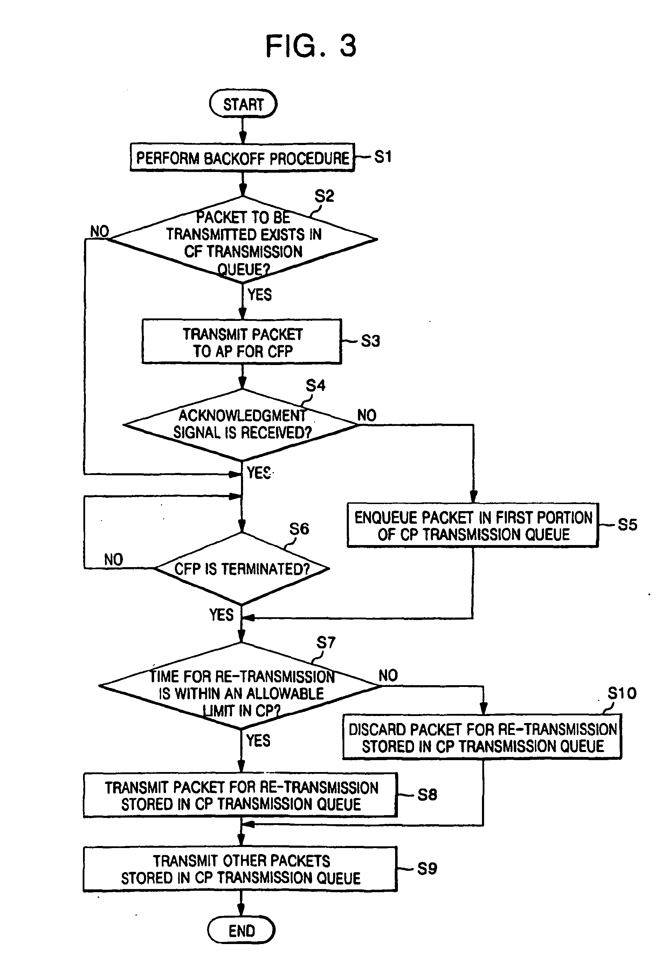

Fig. 3 is a flowchart of a re-transmitting operation in each station in accordance with an embodiment of the present invention.

Referring to Fig. 3, when a CFP is initiated, each station performs a backoff procedure to receive a multi-polling message from an AP, setting a back-off time allocated from the polling message to itself, and occupying a medium (S1). When performing the back-off procedure to occupy the medium, the station determines whether or not a packet to be transmitted to the AP is stored in its own CF transmission queue (S2). As a result of the determination, when the packet to be transmitted to the AP is stored in the CF transmission queue, the corresponding packet is transmitted to the AP (S3). After transmitting the packet to the AP, the station determines whether or not an acknowledgment (ACK) signal for the corresponding packet has been received from the AP (S4). As a result of the determination, when no acknowledgment signal is received from the AP until an SIFS passes after the packet is transmitted, the station determines that it has failed to transmit the packet. Thus, the corresponding packet is enqueued in a first portion of a CP transmission queue to be transmitted for the CP (S5).

When the station has transmitted the packet stored in the CF transmission queue to receive the acknowledgment signal for the CFP, it determines whether or not a CF end signal indicating an end of the CFP has been received, and waits for the CFP to lapse and thus for the CP to be initiated (S6).

In addition, even after the station enqueues the packet whose transmission has resulted in failure in the CP transmission queue for the CFP, it determines whether or not the CF end signal indicating the end of the CFP has been received, and waits for the CFP to lapse and thus for the CP to be initiated.

As a result of the determination, when the CF end frame has been received, the station calculates a time between a point in time when the CF end frame has been received and the next beacon frame (a point in time when the next beacon frame has been received) in order to prevent the CFP of the next super frame from being invaded due to the re-transmission and thereby determining whether or not a time for re-transmission is within an allowable limit (S7).

As a result of the determination, when a time is long enough not to invade the CFP of the next super frame after the CF end frame has been received, the station transmits the packet for re-transmission which is stored in the first portion of the CF transmission queue (S8), and occupies the medium through contention to transmit the other packets stored in the CF transmission queue (S9).

As a result of the determination, when a time is not long enough not to invade the CFP of the next super frame after the CF end frame has been received, the station discards the packet for re-transmission which is stored in the first portion of the CF transmission queue (S10), and occupies the medium through contention to transmit the other packets stored in the CF transmission queue (S9).

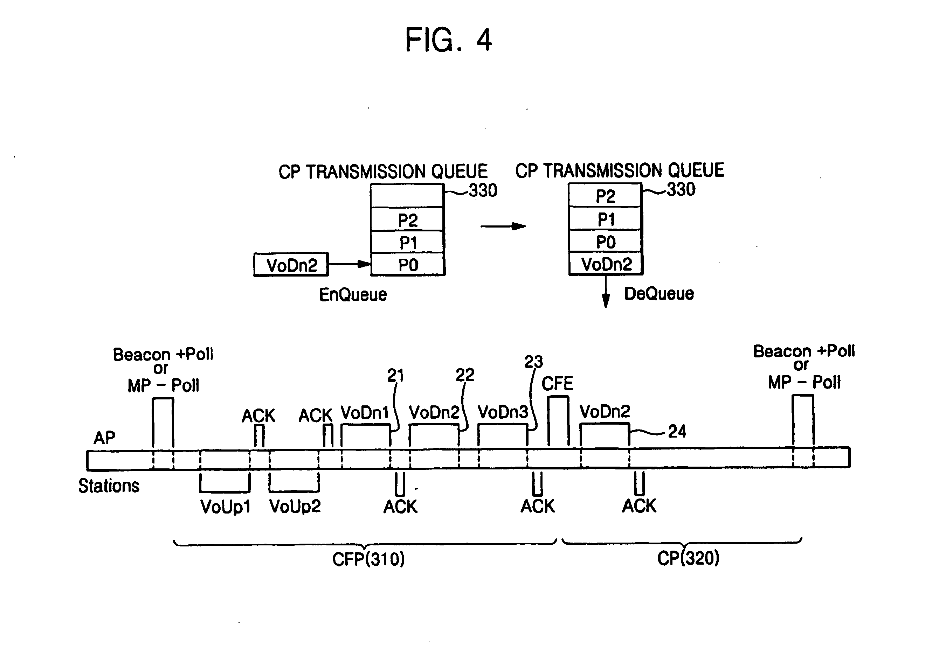

Fig. 4 is a view of a super frame performing a retransmission procedure in an AP in accordance with an embodiment of the present invention.

As shown in Fig. 4, one super frame includes a CFP that has a period from a point in time when one beacon signal has been generated to a point in time when a CF end signal has been generated, and a CP that has a period from a point in time when a CF end signal has generated to a point in time when the next beacon signal has been generated. The CFP consists of a VoUp period and a VoDn period.

For the VoUp period of the CFP, the stations receiving a polling message from an AP transmit packets VoUp1 and VoUp2 stored in their own CF transmission queues to the AP without contention, and the AP transmits an acknowledgment (ACK) signal of each packet to the corresponding station.

Furthermore, for the VoDn period of the CFP, the AP occupies a medium without contention to transmit packets VoDn1, VoDn2 and VoDn3 stored in its own CF transmission queue to the corresponding stations, and the corresponding stations transmit an acknowledgment (ACK) signal of each packet to the AP.

In this normal case, for the VoUp period of the CFP, when an arbitrary station transmits at least one packet stored in its own CF transmission queue, the AP receives the corresponding packet and transmits an acknowledgment signal of the packet to the corresponding station whenever the corresponding packet has been received.

Furthermore, in the normal case, for the VoDn period of the CFP, when the AP transmits the packets stored in its own CF transmission queue, each station receives at least one corresponding packet and transmits the acknowledgment signal of the packet to the AP whenever the corresponding packet has been received from the AP.

For the VoDn period of the CFP, the AP occupies the medium in order to transmit the corresponding packets to the corresponding stations, and gives back a right to occupy the medium after completing the transmission of the packets. The stations must occupy the medium to transmit the acknowledgment signals of the packets received from the AP to the AP. To this end, the stations occupy the medium using an SIFS of IFSs to transmit the acknowledgment signals to the AP.

However, for the VoDn period of the CFP, the AP occupies the medium without contention to transmit the packets VoDn1, VoDn2 and VoDn3, which are stored in its own CF transmission queue, to the corresponding stations, while each of the stations does not transmit the acknowledgment signal with respect to all of the packets.

In other words, the packets of VoDn1 and VoDn3 which transmitted from its own CF transmission queue of the AP are normally received by the corresponding stations, and the acknowledgment signal of each packet is received by the AP, but the packet VoUp2 transmitted to the arbitrary station is not normally received by the corresponding station, and the acknowledgment signal of the corresponding packet is not received from the corresponding station.

If, for the VoDn period of the CFP, the AP transmits the packets to the stations and fails to receive any acknowledgment signal from the corresponding stations by the time that the SIFS has lapsed, the AP determines that the packets that the AP has transmitted to the corresponding stations have not been normally transmitted to the corresponding stations.

Therefore, since the AP transmits the packet VoDn2 to the arbitrary station and then does not receive the acknowledgment signal from the corresponding station, the AP determines that the packet that the AP has transmitted to the corresponding station has not been normally transmitted to the corresponding station. Accordingly, the AP transmits the packet VoDn2 whose transmission has resulted in failure to the corresponding station for the CP after the CFP has been terminated.

In other words, as set forth with reference to Fig. 1, each station includes the CF transmission queue for transmitting the packets to the AP by polling for the CFP, and the CP transmission queue for transmitting the packets to the AP through contention for the CP after occupying the medium.

Therefore, the AP transmitting the packet VoDn2 to the arbitrary station has transmitted the packet VoDn2 stored in the CF transmission queue for the CFP, but it has failed in transmission, and as such, for the purpose of transmitting the corresponding packet with a first priority, the AP enqueues the corresponding packet in a first portion of the CP transmission queue in order to transmit the corresponding packet for the CP.

When the CP is initiated after the CFP has been terminated, the AP transmits the corresponding packet stored in the first portion of the CP transmission queue to the corresponding station, thereby re-transmitting the packet VoDn2 that the AP has attempted but has failed in transmitting.

Since the packet VoDn2 whose transmission has resulted in failure for the CFP is enqueued in the first portion of the CP transmission queue provided to the AP, the packet is re-transmitted to the corresponding station with a first priority for the CP when the CP is initiated after the CFP has been terminated. The corresponding station transmits the acknowledgment (ACK) signal indicating that the packet VoDn2 has been normally received from the AP to the AP.

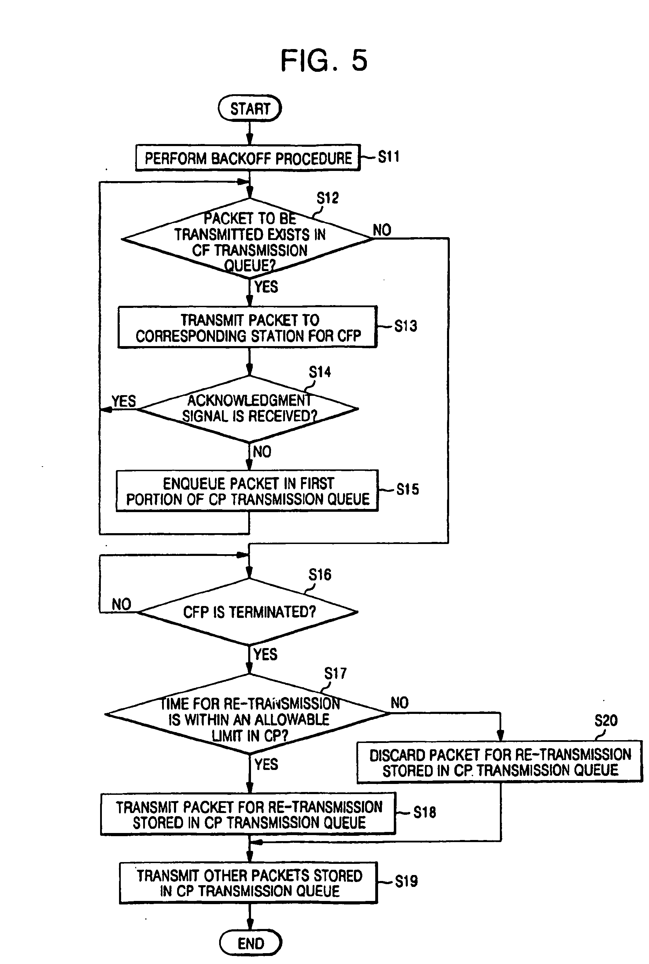

Fig. 5 is a flowchart of a re-transmitting operation in an AP in accordance with an embodiment of the present.

Referring to Fig. 5, when a CFP is initiated, an AP performs a back-off procedure for receiving a multi-polling message from any station, setting a back-off time allocated from the polling message to itself, and occupying a medium (S11).

When performing the back-off procedure to occupy the medium, the AP determines whether or not a packet to be transmitted to each station is stored in its own CF transmission queue (S12). As a result of the determination, when the packet to be transmitted to each station is stored in the CF transmission queue, the corresponding packet is transmitted to the corresponding station (S13). After transmitting the packet to the corresponding station, the AP determines whether or not an acknowledgment (ACK) signal for the corresponding packet has been received from the corresponding station (S14). As a result of the determination, when no acknowledgment signal has been received from the corresponding station during a time period that an SIFS has passed after the packet has been transmitted, the AP determines that it has failed to transmit the packet. Thus, the corresponding packet is enqueued in a first portion of a CP transmission queue which is allocated to the corresponding station in order to be transmitted for the CP, and the packet stored in the CF transmission queue is transmitted to the next station (S 15).

As a result of transmitting the packet stored in the CF transmission queue to each station to thereby determine whether or not the packet to be transmitted to each station exists in the CF transmission queue for the CFP, when the packet to be transmitted does not exist in the CF transmission queue, the AP determines whether a CF end signal indicating an end of the CFP has been generated and transmitted to each station, and waits for the CFP to lapse and thus for the CP to be initiated (S 16).

As a result of the determination, when the CF end frame has been transmitted, the AP calculates a time between a point in time when the CF end frame is transmitted and a point in time when the next beacon frame has been transmitted in order to prevent the CFP of the next super frame from being invaded due to the re-transmission and thereby detennining whether or not a time for re-transmission is within an allowable limit (S 17).

As a result of the determination, when a time for re-transmission is long enough not to invade the CFP of the next super frame after the CF end frame has been transmitted, the AP transmits the packet for re-transmission stored in the first portion of the CF transmission queue (S 18), and occupies the medium to transmit the other packets stored in the CF transmission queue through contention (S19).

As a result of the determination, when a time for re-transmission is not long enough not to invade the CFP of the next super frame after the CF end frame is transmitted, the AP discards the packet for re-transmission stored in the first portion of the CF transmission queue (S20), and occupies the medium through contention to transmit the other packets stored in the CF transmission queue (S 19).

According to the present invention, when the re-transmission between the AP and the station for reducing the packet loss rate is performed in the WLAN system employing the polling-based QoS guaranteed algorithm, the re-transmission is performed for the CP which is initiated after the CFP has lapsed rather than for the CFP. Thus, the re-transmitting operation can be effectively performed without having an influence on transmission of the packet for the CFP which is operated on the basis of polling.

Although a exemplary embodiments of the present invention have been described for illustrative purposes, those skilled in the art will appreciate that various modifications, additions and substitutions are possible, without departing from the scope of the present invention as recited in the accompanying claims.

**Claims**

1.  A method comprising:

    scheduling a super frame (100) to form a first period (CFP, 110, 210, 310) for providing a polling message to arbitrary stations at an Access Point (AP) and allowing only stations receiving the polling message to get access to a medium without contention, and to form a second period (CP, 120, 220, 320) for allowing the stations to get access to the medium through contention;
    transmitting packets (21, 22, 23) stored in a first transmission queue to the corresponding stations during the first period (CFP, 110, 210, 310) of the super frame (100); and
    enqueuing a packet (22) whose transmission was determined as defective during the first period (CFP, 110, 210, 310) in the first portion of a second transmission queue (230, 330) in order to re-transmit said packet (22) with priority with the second transmission queue (230, 330) during the second period.

2.  The method as claimed in claim 1, further comprising:

    determining whether or not the packet (22) for re-transmission stored in the first portion of the second transmission queue (230, 330) is within a transmission time limit upon initialisation of the second period (CP, 120, 220, 320) of the super frame (100); and
    re-transmitting the packet (22) stored in the second transmission queue (230, 330) to the corresponding station upon the determination that the packet (22) is within the transmission time limit.

3. The method as claimed in claim 2, further comprising discarding the packet (22) for re-transmission stored in the second transmission queue (230, 330) upon the determination that the packet is beyond the transmission time limit.

4. The method as claimed in claim 1, wherein a determination that at least one of the packets (21, 22, 23) transmitted to the stations has failed to be transmitted comprises determining that an acknowledgment signal of the transmitted packet (22) has not been received from the corresponding station.

5. A method comprising:

scheduling a super frame (100) to form a first period (CFP, 110, 210, 310) for providing a polling message to arbitrary stations at an Access Point (AP) and allowing only stations receiving the polling message to get access to a medium without contention, and to form a second period (CP, 120, 220, 320) for allowing the stations to get access to the medium through contention;
transmitting packets (11, 12, 13) stored in a first transmission queue to the Access Point (AP) during the first period (CFP, 110, 210, 310) of the super frame (100); and
enqueuing a packet (12) whose transmission was determined as defective during the first period (CFP, 110, 210, 310) in the first portion of a second transmission queue (230, 330) to re-transmit said packet (12) with priority with the second transmission queue during the second period.

6. The method as claimed in claim 5, further comprising:

determining whether or not the packet (12) for re-transmission stored in the first portion of the second transmission queue (230, 330) is within a transmission time limit upon initialisation of the second period (CP, 120, 220, 320) of the super frame (100); and
re-transmitting the packet (12) stored in the second transmission queue (230, 330) to the Access Point (AP) upon the determination that the packet (12) is within the transmission time limit.

7. The method as claimed in claim 6, further comprising discarding the packet (12) for re-transmission stored in the second transmission queue (230, 330) upon the determination that the packet (12) is beyond the transmission time limit.

8. The method as claimed in claim 5, wherein a determination that at least one of the packets (11, 12, 13) transmitted to the Access Point (AP) has failed to be transmitted comprises determining that an acknowledgment signal of the transmitted packet (12) has not been received from the Access Point (AP).

**Patentansprüche**

1. Verfahren, das aufweist:

Ansetzen eines Überrahmens (100) zum Bilden eines ersten Zeitintervalls (CFP, 110, 210, 310) zum Bereitstellen einer Polling-Mitteilung an beliebige Stationen an einem Zugriffspunkt (AP) und um nur Stationen, die die Polling-Mitteilung empfangen, Zugang zu einem Medium ohne Konkurrenzverfahren zu gewähren, und zum Bilden eines zweiten Zeitintervalls (CP, 120, 220, 320) um den Stationen Zugang zu dem Medium durch Konkurrenzverfahren zu gewähren;
Übertragen von Paketen (21, 22, 23), die in einer ersten Übertragungsschlange abgelegt sind, an entsprechende Stationen während des ersten Zeitintervalls (CFP, 110, 210, 310) des Überrahmens (100); und
Einreihen eines Paketes (22), dessen Übertragung während des ersten Zeitintervalls (CFP, 110, 210, 310) als fehlerhaft bestimmt wurde, in den ersten Teil einer zweiten Übertragungsschlange (230, 330) um das Paket (22) in der zweiten Übertragungsschlange (230, 330) mit Priorität wiederholt zu übertragen.

2. Verfahren nach Anspruch 1, weiterhin aufweisend:

Bestimmen, ob das Paket (22) zur wiederholten Übertragung, das in dem ersten Teil der zweiten Übertragungsschlange (230, 330) abgelegt ist, innerhalb einer Übertragungszeitgrenze ist beim Initialisieren des zweiten Zeitintervalls (CP, 120, 220, 320) des Überrahmens (100); und

Wiederholtes übertragen des Pakets (22), das in der zweiten Übertragungsschlange (220, 330) abgelegt ist, zu der entsprechenden Station nach dem Feststellen, dass das Paket (22) innerhalb der Übertragungszeitgrenze ist.

3. Verfahren nach Anspruch 2, weiter aufweisend
Verwerfen des Pakets (22) für die wiederholte Übertragung, das in der zweiten Übertragungsschlange (230, 330) abgelegt ist, bei der Feststellung, dass das Paket über die Übertragungszeitgrenze hinausgeht.

4. Verfahren nach Anspruch 1, wobei ein Feststellen, dass zumindest eines der Pakete (21, 22, 23), das an die Stationen übertragen wurde, nicht übertragen wurde, das Feststellen umfasst, dass ein Bestätigungssignal des übertragenen Pakets (22) von der entsprechenden Station nicht empfangen wurde.

5. Verfahren, das aufweist:

Ansetzen eines Überrahmens (100) zum Bilden eines ersten Zeitintervalls (CFP, 110, 210, 310) zum Bereitstellen einer Polling-Mitteilung zu beliebigen Stationen an einem Zugriffspunkt (AP) und um nur Stationen, die die Polling-Mitteilung empfangen, Zugang zu einem Medium ohne Konkurrenzverfahren zu gewähren und zum Bilden eines zweiten Zeitintervalls (CP, 120, 220, 320) um Stationen Zugang zu dem Medium durch Konkurrenzverfahren zu gewähren;
Übertragen von Paketen (11, 12, 13), die in einer ersten Übertragungsschlange abgelegt sind, an den Zugriffspunkt (AP) während des ersten Zeitintervalls (CFP, 110, 210, 310) des Überrahmens (100); und
Einreihen eines Paketes (12), dessen Übertragung während des ersten Zeitintervalls (CFP, 110, 210, 310) als fehlerhaft bestimmt wurde, in den ersten Teil einer zweiten Übertragungsschlange (230, 330) um das Paket (12) in der zweiten Übertragungsschlange während des zweiten Zeitintervalls mit Priorität wiederholt zu übertragen.

6. Verfahren nach Anspruch 5, weiter aufweisend:

Bestimmen, ob das Paket (12) zur wiederholten Übertragung, das in dem ersten Teil der zweiten Übertragungsschlange (230, 330) abgelegt ist, innerhalb einer Übertragungszeitgrenze ist beim Initialisieren des zweiten Zeitintervalls (CP, 120, 220, 320) des Überrahmens (100); und
Wiederholtes übertragen des Pakets (12), das in der zweiten Übertragungsschlange (230, 330) abgelegt ist, an den Zugriffspunkt (AP) nach dem Feststellen, dass das Paket (12) innerhalb der Übertragungszeitgrenze ist.

7. Verfahren nach Anspruch 6, weiter aufweisend
Verwerfen des Pakets (12) für die wiederholte Übertragung aus der zweiten Übertragungsschlange (230, 330) beim Feststellen, dass das Paket (12) außerhalb der Übertragungszeitgrenze ist.

8. Verfahren nach Anspruch 6, wobei ein Feststellen, dass zumindest eines der Pakete (11, 12, 13), das an den Zugriffspunkt (AP) übertragen wurde, nicht übertragen wurde, das Feststellen umfasst, dass ein Bestätigungssignal des übertragenen Paketes (12) nicht von dem Zugriffspunkt (AP) empfangen wurde.

## Revendications

1. Procédé comprenant :

la planification d'une supertrame (100) pour former une première période (CFP, 110, 210, 310) destinée à fournir un message d'invitation à émettre à des postes quelconques au niveau d'un point d'accès (AP) et autorisant seulement les stations recevant le message d'invitation à émettre à obtenir l'accès à un support sans conflit, et pour former une seconde période (CP, 120, 220, 320) destinée à permettre aux postes d'obtenir l'accès au support malgré le conflit ;
la transmission, aux postes correspondants, de paquets (21, 22, 23) mémorisés dans une première file d'attente d'émission pendant la première période (CFP, 110, 210, 310) de la supertrame (100) ; et
la mise en file d'attente d'un paquet (22) dont la transmission a été déterminée comme défectueuse pendant la première période (CFP, 110, 210, 310) dans la première partie d'une seconde file d'attente (230, 330) d'émission afin de réémettre ledit paquet (22) en priorité avec la seconde file d'attente (230, 330) d'émission pendant la seconde période.

**2.** Procédé selon la revendication 1, comprenant en outre :

la détermination de ce que le paquet (22) pour réémission mémorisé dans la première partie de la seconde file d'attente (230, 330) d'émission est, ou non, à l'intérieur d'une limite de temps d'émission à l'initialisation de la seconde période (CP, 120, 220, 320) de la supertrame (100) ; et
la retransmission, au poste correspondant, du paquet (22) mémorisé dans la seconde file d'attente (230, 330) d'émission après détermination que le paquet (22) est à l'intérieur de la limite de temps d'émission.

**3.** Procédé selon la revendication 2, comprenant en outre l'élimination du paquet (22) pour réémission mémorisé dans la seconde file d'attente (230, 330) d'émission après détermination que le paquet est au-delà de la limite de temps d'émission.

**4.** Procédé selon la revendication 1, dans lequel la détermination de ce qu'au moins l'un des paquets (21, 22, 23) transmis aux postes n'a pas réussi à être transmis comprend la détermination de ce qu'un signal d'accusé de réception du paquet transmis (22) n'a pas été reçu du poste correspondant.

**5.** Procédé comprenant :

la planification d'une supertrame (100) pour former une première période (CFP, 110, 210, 310) destinée à fournir un message d'invitation à émettre à des postes quelconques au niveau d'un point d'accès (AP) et autorisant seulement les stations recevant le message d'invitation à émettre à obtenir l'accès à un support sans conflit, et pour former une seconde période (CP, 120, 220, 320) destinée à permettre aux postes d'obtenir l'accès au support sans conflit ;
la transmission, au point d'accès (AP), de paquets (11, 12, 13) mémorisés dans une première file d'attente d'émission pendant la première période (CFP, 110, 210, 310) de la supertrame (100) ; et
la mise en file d'attente d'un paquet (12) dont la transmission a été déterminée comme défectueuse pendant la première période (CFP, 110, 210, 310) dans la première partie d'une seconde file d'attente (230, 330) d'émission pour réémettre ledit paquet (12) en priorité avec la seconde file d'attente d'émission pendant la seconde période.

**6.** Procédé selon la revendication 5, comprenant en outre :

la détermination de ce que le paquet (12) pour réémission mémorisé dans la première partie de la seconde file d'attente (230, 330) d'émission se trouve, ou non, dans une limite de temps d'émission à l'initialisation de la seconde période (CP, 120, 220, 320) de la supertrame (100) ; et
la retransmission, au point d'accès (AP), du paquet (12) mémorisé dans la seconde file d'attente (230, 330) d'émission après détermination que le paquet (12) est situé dans la limite de temps d'émission.

**7.** Procédé selon la revendication 6, comprenant en outre l'élimination du paquet (12) pour réémission mémorisé dans la seconde file d'attente (230, 330) d'émission après détermination que le paquet (12) se trouve au-delà de la limite de temps d'émission.

**8.** Procédé selon la revendication 5, dans lequel la détermination de ce qu'au moins l'un des paquets (11, 12, 13) transmis au point d'accès (AP) n'a pas réussi à être transmis comprend la détermination de ce qu'un signal d'accusé de réception du paquet transmis (12) n'a pas été reçu du point d'accès (AP).

# FIG. 1

EP 1 659 738 B1

# FIG. 2

CP TRANSMISSION QUEUE     CP TRANSMISSION QUEUE

```
            ┌──────────┐ ~230        ┌──────────┐ ~230
            │          │             │    P2    │
            │    P2    │             │    P1    │
            │    P1    │     ──→      │    P0    │
  VoUp2 ──→ │    P0    │             │   VoUp2  │
            └──────────┘             └──────────┘
  EnQueue                                  │ DeQueue
                                           ↓
```

EP 1 659 738 B1

# FIG. 3

START

PERFORM BACKOFF PROCEDURE — S1

S2
PACKET TO BE TRANSMITTED EXISTS IN CF TRANSMISSION QUEUE?

NO

YES

TRANSMIT PACKET TO AP FOR CFP — S3

S4
ACKNOWLEDGMENT SIGNAL IS RECEIVED?

NO

YES

ENQUEUE PACKET IN FIRST PORTION OF CP TRANSMISSION QUEUE — S5

S6
CFP IS TERMINATED?

NO

YES

S7
TIME FOR RE-TRANSMISSION IS WITHIN AN ALLOWABLE LIMIT IN CP?

NO

S10
DISCARD PACKET FOR RE-TRANSMISSION STORED IN CP TRANSMISSION QUEUE

YES

TRANSMIT PACKET FOR RE-TRANSMISSION STORED IN CP TRANSMISSION QUEUE — S8

TRANSMIT OTHER PACKETS STORED IN CP TRANSMISSION QUEUE — S9

END

# FIG. 4

CP TRANSMISSION QUEUE 330

| P2 |
| P1 |
| P0 |

VoDn2 → EnQueue

CP TRANSMISSION QUEUE 330

| P2 |
| P1 |
| P0 |
| VoDn2 |

DeQueue →

AP

Stations

Beacon +Poll or MP – Poll

ACK  ACK  VoDn1  21  VoUp1  VoUp2  ACK  VoDn2  22  VoDn3  23  CFE  VoDn2  24  ACK

CFP(310)  CP(320)

Beacon +Poll or MP – Poll

## FIG. 5

```
        ( START )
            │
            ▼
  ┌─────────────────────────┐
  │ PERFORM BACKOFF PROCEDURE │──S11
  └─────────────────────────┘
            │
            ▼
       ╱─────────╲  S12
      ╱ PACKET TO BE ╲
     ╱ TRANSMITTED EXISTS IN ╲── NO ──┐
     ╲   CF TRANSMISSION    ╱         │
      ╲     QUEUE?        ╱           │
       ╲───────────╱                 │
            │ YES                     │
            ▼                         │
  ┌─────────────────────────┐         │
  │    TRANSMIT PACKET TO    │──S13    │
  │ CORRESPONDING STATION FOR CFP │    │
  └─────────────────────────┘         │
            │                         │
            ▼                         │
       ╱─────────╲  S14               │
 YES ─╱ ACKNOWLEDGMENT ╲              │
      ╲ SIGNAL IS RECEIVED? ╱          │
       ╲───────────╱                 │
            │ NO                      │
            ▼                         │
  ┌─────────────────────────┐         │
  │   ENQUEUE PACKET IN FIRST │──S15    │
  │ PORTION OF CP TRANSMISSION QUEUE │  │
  └─────────────────────────┘         │
            │◄────────────────────────┘
            ▼
       ╱─────────╲  S16
 NO ─╱ CFP IS TERMINATED? ╲
      ╲───────────╱
            │ YES
            ▼
       ╱─────────╲  S17
      ╱ TIME FOR RE-TRANSMISSION ╲── NO ──┐
      ╲ IS WITHIN AN ALLOWABLE    ╱        │    S20
       ╲    LIMIT IN CP?        ╱          ▼
        ╲───────────╱          ┌──────────────────────────┐
            │ YES              │ DISCARD PACKET FOR RE-TRANSMISSION │
            ▼                  │ STORED IN CP TRANSMISSION QUEUE │
  ┌─────────────────────────┐  └──────────────────────────┘
  │ TRANSMIT PACKET FOR RE-TRANSMISSION │──S18        │
  │ STORED IN CP TRANSMISSION QUEUE │                 │
  └─────────────────────────┘◄───────────────────────┘
            │
            ▼
  ┌─────────────────────────┐
  │ TRANSMIT OTHER PACKETS STORED │──S19
  │   IN CP TRANSMISSION QUEUE   │
  └─────────────────────────┘
            │
            ▼
        ( END )
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Youssef M A et al.** *Network protocols,* 2002, 132-141